# FASCICULE DE BREVET EUROPEEN

(11) **EP 1 281 227 B1**
(45) Date de publication et mention de la délivrance du brevet: **08.03.2006**
(21) Numéro de dépôt: 00964304.0
(22) Date de dépôt: 15.09.2000
(51) Int. Cl.: H02H 9/04

(54) **DISPOSITIF DE PROTECTION CONTRE LES SURTENSIONS**
ÜBERSPANNUNGSSCHUTZELEMENT
DEVICE PROTECTING AGAINST VOLTAGE SURGES

(30) Priorité: 17.09.1999 FR 9911656
(43) Date de publication de la demande: 05.02.2003
(73) Titulaire: ADEE ELECTRONIC, 21410 Pont de Pany (FR)
(72) Inventeur: Francois Girard, 21000 Dijon (FR)
(74) Mandataire: Puiroux, Guy
(86) Numéro de dépôt international: PCT/FR2000/002574
(87) Numéro de publication internationale: WO 2001/022551

(56) Documents cités:
- WO-A-83/00586
- WO-A-90/02431
- WO-A-93/21678
- DE-U- 29 808 365
- FR-A- 2 585 892
- US-A- 5 198 791

## Description

La présente invention concerne un dispositif destiné à assurer la protection d'appareils électroniques contre les surtensions qui se manifestent parfois sur les conducteurs utilisés dans les réseaux de distribution de l'énergie électrique, notamment dans le cas de chute de la foudre.

On a proposé dans l'état antérieur de la technique une quantité très diverse de dispositifs parafoudre qui sont branchés entre un fil du réseau et la terre ou un élément conducteur commun, et qui comprennent des composants qui, en fonctionnement normal, se comportent comme des éléments neutres, mais qui, en cas de surtension violente, deviennent conducteurs, si bien qu'ils dérivent le courant dû à la surtension et notamment à la foudre, protégeant ainsi l'installation disposée en aval contre les effets destructeurs de cette surtension.

Les caractéristiques techniques qui sont exigées de tels appareils sont très diverses, si bien que, jusqu'à présent, aucun dispositif parafoudre du marché ne satisfait totalement à l'ensemble des caractéristiques nécessaires :

Ces dernières sont les suivantes :
- très faible temps de réponse,
- très grand pouvoir d'écoulement du courant,
- tension résiduelle très faible,
- continuité du service, et de la protection
- prix de revient devant pouvoir être déterminé en fonction du coût des appareils et des dispositifs à protéger.

On a proposé pour assurer une telle fonction d'utiliser des éclateurs à gaz. Cependant ces derniers possèdent de notables inconvénients et en particulier celui de présenter un retard important à l'amorçage si bien que, dans certains cas, et notamment dans le cas de surtensions particulièrement violentes et rapides provoquées par la foudre, la détérioration des appareils électroniques se produit avant la dérivation du courant de foudre par l'éclateur.

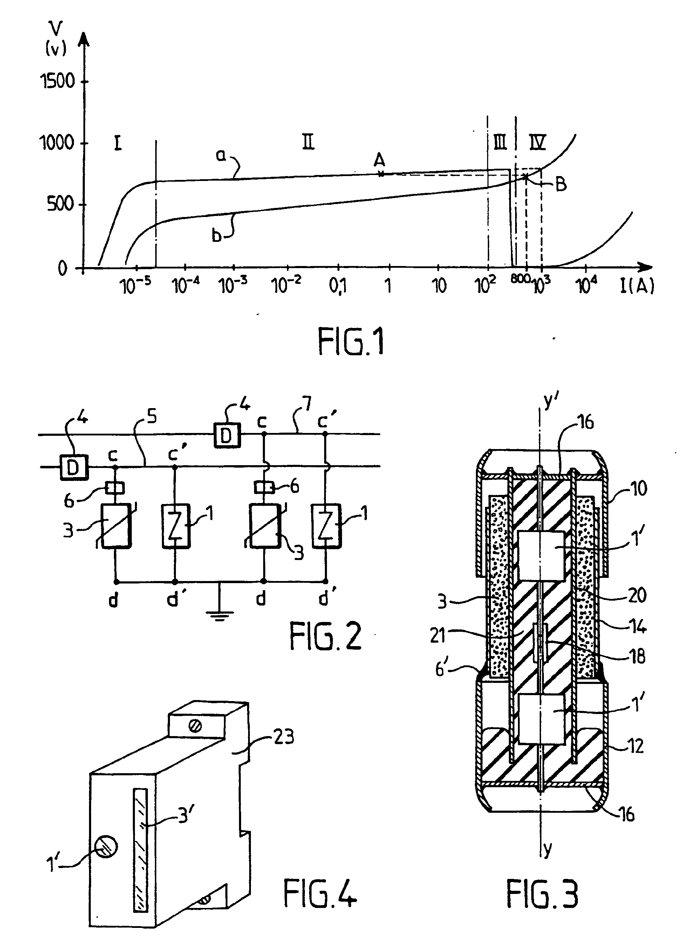

On a également fait appel à des varistances qui présentent l'avantage d'absorber des énergies thermiques et électriques importantes sans se détruire, lorsqu'elles subissent des impulsions de courant, si bien qu'elles permettent ainsi d'écrêter une surtension, notamment provoquée par la foudre, sans que l'alimentation en courant des appareils que le dispositif entend protéger ne soit interrompue. Un exemple d'une caractéristique de varistance est représenté sur la figure 1 (courbe b).

Cependant on sait de façon générale qu'un parafoudre est un dispositif qui est branché entre une ligne à protéger et la terre ou un élément conducteur commun, et qui devient conducteur à l'apparition d'une surtension transitoire et qui, en écoulant l'énergie de celle-ci, protège les équipements électroniques sensibles disposés en aval contre les effets destructeurs de cette surtension. On comprend ainsi qu'un parafoudre de type idéal ne doit pas conduire le courant électrique lorsque la tension à ses bornes est normale et conduire rapidement une grande quantité de courant quand la tension devient anormale, tout en maintenant la surtension à un niveau acceptable.

Or l'inconvénient principal des varistances est que, sous l'effet de chocs électriques répétés, et en raison des températures de fonctionnement élevées, elles subissent une usure qui se traduit par une fin de vie résistive par abaissement du seuil d'écrêtage. On est ainsi contraint d'introduire des déconnecteurs (norme NFC 61-740 juillet 1995 et norme CEI 61653-1 du 1^{er} mars 1998) dans les lignes d'énergie, qui ont pour but d'ouvrir le circuit en cas de fin de vie afin d'éviter le déclenchement d'incendie. L'un des déconnecteurs utilisés est obligatoirement disposé à l'intérieur du corps du parafoudre, ce qui entraîne la suppression de la protection dès après son actionnement.

Un tel mode de fonctionnement est extrêmement risqué au niveau de la protection d'une installation dans la mesure où, lors d'un orage, les surtensions se succèdent à une certaine cadence dépendant des différents coups de foudre. On a donc proposé divers moyens destinés à supprimer cet inconvénient, notamment en disposant plusieurs varistances en parallèle, ce qui est possible grâce à l'importance de la pente (rapport U/I) de leur caractéristique. Une telle mise en parallèle peut être effectuée à l'aide de varistances de valeurs différentes ce qui permet de contrôler, dans une certaine mesure, l'ordre de leur destruction.

On sait également qu'un autre inconvénient des varistances est qu'elles présentent une tension résiduelle trop élevée dans le cas d'un front de tension très rapide et dans le cas de courants très forts.

On a également proposé des dispositifs parafoudre faisant appel à des diodes Zener qui présentent l'avantage de ne pas être influencées par l'usure due à des chocs électriques répétés et de fonctionner à des températures élevées. Ces parafoudres sont tels qu'une fois la diode Zener détruite du fait d'une surtension, ils deviennent immédiatement conducteurs si bien qu'ils conduisent à la terre la surtension. Ils possèdent alors une capacité importante d'écoulement des courants et des tensions résiduelles très faibles, et ceci dans tous les cas de figure.

Les parafoudres de ce type présentent malheureusement l'inconvénient d'être d'un coût élevé, dans la mesure où les diodes Zener utilisées sont construites à partir de silicium monocristallin qui est beaucoup plus cher que les produits utilisés pour réaliser les varistances et qui doit être disposé entre des disques dissipateurs de la chaleur en cuivre ou en argent. Ces parafoudres doivent donc être construits avec un grand nombre de disques qui est fonction de l'importance de l'énergie que l'on souhaite absorber avant destruction en court-circuit de l'élément.

Néanmoins malgré leur coût de tels parafoudres sont cependant intéressants puisqu'ils assurent, après leur destruction, une continuité de la protection des appareils qu'ils sont destinés protéger.

On connaît également par le brevet DE-U-298 08 365 un circuit de protection haute tension destiné à protéger des dispositifs de mesure à basse impédance d'entrée permettant d'éviter différents problèmes qui sont rencontrés sur les circuits conventionnels et notamment des effets de perte de courant lors des mesures de haute précision.

Ce circuit dont le but est différent de celui objet de la présente demande comporte une varistance et une diode Zener qui sont associés. Cependant les bornes de ces deux éléments ne sont pas communes et le circuit ne peut ainsi assurer la fonction du circuit suivant l'invention.

Un autre exemple d'un dispositif de protection contre les surtensions selon l'art antérieur est décrit dans le document WO-A-9002431.

La présente invention a pour but de remédier aux divers inconvénients de la technique antérieure en proposant un dispositif de protection contre les surtensions, et notamment contre les effets de la foudre, qui satisfasse à la fois aux différentes conditions visées précédemment.

La présente invention a ainsi pour objet un dispositif de protection contre les surtensions d'une ligne d'alimentation en courant électrique, caractérisé en ce qu'il comprend au moins deux éléments, à savoir au moins un parafoudre à diode Zener du type à fin de vie en court-circuit, et une varistance, dont les bornes sont communes et qui sont disposés en parallèle, l'une des bornes commune de ces deux éléments étant reliée à la ligne à protéger, et l'autre borne commune étant reliée à la terre ou à un élément conducteur commun.

L'élément à varistance pourra être associé à un déconnecteur qui sera disposé entre celui-ci et la ligne à protéger. Par ailleurs un déconnecteur pourra être disposé en amont de la borne commune des deux éléments qui est reliée à la ligne à protéger.

Dans un mode de mise en oeuvre particulièrement intéressant de l'invention le dispositif sera constitué d'une enveloppe de forme globale cylindrique dont les deux extrémités seront formées de deux bagues métalliques isolées l'une de l'autre qui constitueront ses deux bornes, chacune de celles-ci étant respectivement réunie aux dites bornes communes des deux éléments. L'élément parafoudre à diode Zener sera préférentiellement disposé suivant l'axe longitudinal de l'enveloppe cylindrique. L'élément varistance aura la forme d'un tube qui sera disposé autour de l'élément parafoudre à diode Zener, de façon que son axe longitudinal soit confondu avec l'axe longitudinal de l'enveloppe cylindrique. Par ailleurs les surfaces interne et externe de l'élément varistance pourront être respectivement en contact avec un tube métallique interne et un tube métallique externe qui formeront ses électrodes et qui seront respectivement en contact avec les bagues métalliques.

De façon intéressante la liaison entre la bague métallique et le tube externe est assurée par des points de soudure dont le volume et le nombre sont tels qu'ils sont aptes à fondre sous l'effet d'une surtension de façon à assurer une fonction de déconnecteur.

L'espace intérieur du tube interne pourra être rempli d'un produit isolant et résistant tel que notamment une résine époxy.

Le dispositif de protection suivant l'invention peut également être constitué d'un support connecteur qui comporte des moyens de réception respectifs des éléments qui assure leur liaison en parallèle ainsi que la connexion de leurs bornes communes respectives avec les bornes du dispositif.
La figure 1 est un graphique représentant les caractéristiques (c'est-à-dire la variation de la tension en fonction du courant) d'une part d'un parafoudre de type à diode Zener (courbe a) et d'autre part, d'une varistance (courbe b).
La figure 2 est un schéma de principe montrant un dispositif de protection suivant l'invention et sa disposition pratique sur une ligne de courant à protéger.
La figure 3 est une vue en coupe axiale et longitudinale d'un mode de mise en oeuvre d'un dispositif de protection suivant l'invention.
La figure 4 est une vue en perspective d'une seconde variante de mise en oeuvre d'un dispositif de protection suivant l'invention.

Ainsi que représenté sur la figure 2, on a associé en parallèle deux éléments de parafoudre, à savoir un élément parafoudre 1 à diode Zener du type dans lequel un court-circuit s'établit entre ses bornes lorsque l'on atteint un certain niveau de surtension, et une varistance 3, de façon telle que leurs bornes respectives c et c' d'une part et d et d' d'autre part soient communes.

Le parafoudre est destiné à assurer la protection d'une ligne électrique 5. Pour ce faire l'une des bornes commune c,c' des deux éléments de parafoudre 1 et 3 est reliée à la ligne 5 et leur autre borne commune d,d' est reliée à la terre. Un déconnecteur 4 est disposé sur la ligne 5 en amont des éléments de parafoudre 1 et 3 et un autre déconnecteur 6 est disposé juste en amont de la varistance 3. L'autre ligne 7 de l'installation peut être protégée de la même façon.

Sur la figure 1 on a représenté les caractéristiques respectives a et b des deux éléments de parafoudre 1 et 3, c'est-à-dire la variation de la tension V aux bornes d'un élément en fonction de l'intensité I du courant qui traverse celui-ci. On peut ainsi, en fonction de la valeur du courant, distinguer quatre zones I, II, III, IV.

En ce qui concerne l'élément 1, qui est le parafoudre comportant une diode Zener, on constate que : dans la première zone I un courant très faible s'établit et correspond à la polarisation de la diode Zener. Dans la seconde zone II, qui correspond à une zone dite zone d'avalanche, la tension est presque constante quelque soit le courant qui traverse le parafoudre. Dans la troisième zone III la puissance électrique établie, qui correspond au produit de la tension maintenue par le courant, engendre, à l'intérieur du parafoudre, une chaleur importante qui provoque la fusion des éléments et qui confère à l'ensemble une résistance électrique très faible définitive. Dans la quatrième zone IV, la résistance étant devenue très faible, la tension aux bornes du parafoudre s'élève peu malgré des courants très élevés. On sait que le processus d'écrêtage qui s'effectue dans les zones I et II est un processus à caractère réversible ne créant aucune usure et aucun changement des caractéristiques du parafoudre. A l'inverse, dans la zone III, il y a un changement brutal et irréversible des caractéristiques.

Ainsi que représenté sur la même figure 1, la caractéristique correspondante de l'élément 3, à savoir la varistance, se situe sous celle de l'élément parafoudre 1, si bien que lorsque les deux éléments de parafoudre sont associés en parallèle et ont leurs bornes de connexion respectives communes et, en conséquence sont alimentées à leurs extrémités par une même tension, c'est l'élément 3 constitué par la varistance qui assure le débit du courant (puisque pour une tension d'environ 500 volts aux bornes de ces deux éléments la varistance 3 débitera un courant d'intensité de l'ordre de 0,05 milliampères alors que le courant débité dans le parafoudre sera de l'ordre d'environ 5 microampères). L'association en parallèle avec bornes communes de la varistance 3 et du parafoudre 1 constitué essentiellement d'une diode Zener permettra, lorsque la tension aux bornes de la varistance atteint la valeur d'avalanche de la diode Zener, de continuer à conduire le courant jusqu'à ce que la puissance de claquage de la diode Zener soit atteinte, ce qui se produira pour une valeur de courant très supérieure, à ce qu'elle aurait été sans l'association de la varistance.

On a représenté sur la figure 3 un exemple pratique de mise en oeuvre d'un dispositif parafoudre. Ce dispositif parafoudre est de forme globale cylindrique d'axe longitudinal yy'. Il comprend deux bagues extrêmes métalliques 10 et 12 qui constituent les deux bornes de connexion du parafoudre. L'une de ces bagues, la bague 12 inférieure sur le dessin, est solidarisée par soudure d'un tube métallique 14 de plus faible diamètre. Chacune des deux bagues métalliques 10,12 reçoit, en une zone proche de son extrémité, un disque métallique 16 duquel elle est solidarisée par soudage. On a disposé suivant l'axe longitudinal yy' du dispositif deux éléments de parafoudre 1' à diode Zener du type à fin de vie en court-circuit. Ces deux éléments 1' sont disposés en série et sont réunis par une jonction métallique tubulaire 18 de façon que leurs bornes extrêmes soient respectivement soudées aux disques 16 au centre de ceux-ci. Les deux éléments de parafoudre à diode Zener 1' sont du type dans lequel, sous l'effet d'une très forte puissance, ils se mettent en court-circuit de façon définitive. De tels parafoudres sont notamment du type de ceux décrits dans les brevets FR-A-2.511.556 et FR-A-2.585.892.

Les deux éléments de parafoudre 1' sont entourés d'un élément tubulaire 20 métallique qui est soudé à l'une de ces extrémités sur le disque supérieur 16 et qui constitue un blindage destiné à lui conférer une tenue mécanique suffisante pour lui permettre de résister aux fortes puissances qui sont générées par les courants développés par le phénomène de foudre, et ceci pendant un temps suffisant permettant aux dispositifs déconnecteurs éventuels d'être activés.

La varistance 3 a une forme tubulaire et sa face interne est en contact avec le tube interne 20 qui constitue ainsi l'une de ses électrodes et sa face externe est en contact avec le tube externe 14 qui constitue son autre électrode. Ce tube 14 est réuni à la bague 12 par soudure.

Dans ce mode de mise en oeuvre particulier de l'invention on pourra faire en sorte que la soudure qui relie la bague 12 au tube 14 joue le rôle du déconnecteur 6, c'est-à-dire qu'elle fonde lors d'une surtension. A cet effet, cette soudure 6.' pourra être une soudure à l'étain dont on déterminera le volume de façon à provoquer sa fusion dans des conditions spécifiques. Elle pourra notamment être constituée d'une série de points répartis sur la périphérie de la jonction de la bague 12 et du tube 14.

Le volume interne du tube 20, ainsi que celui délimité par les parois internes de la bague 12, sont remplis d'une résine 21, par exemple, une résine thermodurcissable ou époxy. Cette résine est choisie d'une part, pour ses qualités d'isolant mais également d'autre part, pour ses qualités d'adhérence avec les éléments de boîtier avec lesquels elle est en contact ainsi que pour ses qualités de résistance mécanique propres.

On pourrait bien entendu constituer le dispositif de protection contre les surtensions suivant l'invention avec une autre structure.

Ainsi que représentée sur la figure 4 le dispositif de protection comprend un boîtier encastrable modulaire 23, du type standardisé, comportant un premier logement cylindrique lui permettant de recevoir un élément parafoudre à diode Zener 1' de forme globalement cylindrique et un second logement de forme parallélépipédique lui permettant de recevoir une varistance 3' de même forme. Le boîtier 23 comporte des moyens internes de connexion permettant de mettre les deux éléments de parafoudre 1' et 3' en parallèle et d'assurer la liaison de leurs bornes communes respectives avec les bornes du dispositif, ainsi qu'un déconnecteur associé à la varistance.

## Revendications

1. Dispositif de protection contre les surtensions d'une ligne d'alimentation en courant électrique, **caractérisé en ce qu'**il comprend au moins deux éléments (1,1',3) à savoir au moins un parafoudre à diode Zener (1,1') du type à fin de vie en court-circuit, et une varistance (3), dont les bornes de connexion respectives sont communes et qui sont disposés en parallèle, l'une des bornes commune (c,c') de ces deux éléments (1,1',3) étant reliée à la ligne (5,7) à protéger, et l'autre borne commune (d,d') étant reliée à la terre ou à un élément conducteur commun.

2. Dispositif suivant la revendication 1 **caractérisé en ce que** la varistance (3) est associée à un déconnecteur (6,6') qui est disposé entre celle-ci et la ligne (5,7) à protéger

3. Dispositif suivant l'une des revendications 1 ou 2 **caractérisé en ce qu'**un déconnecteur (4) est disposé en amont de la borne commune des deux éléments (1,3) qui est reliée à la ligne (5,7) à protéger.

4. Dispositif suivant l'une des revendications précédentes **caractérisé en ce qu'**il est formé d'une enveloppe de forme globale cylindrique dont les deux extrémités sont formées de deux bagues métalliques (10,12) isolées l'une de l'autre constituant ses deux bornes, chacune de celles-ci étant respectivement réunie aux dites bornes communes des deux éléments (1,3).

5. Dispositif suivant la revendication 4 **caractérisé en ce que** l'élément parafoudre à diode Zener (1,1') est disposé suivant l'axe longitudinal (yy') de l'enveloppe cylindrique.

6. Dispositif suivant l'une des revendications 4 ou 5 **caractérisé en ce que** la varistance (3) a la forme d'un tube qui est disposé autour de l'élément parafoudre à diode Zener (1') de façon que son axe longitudinal soit confondu avec l'axe longitudinal (yy') de l'enveloppe cylindrique.

7. Dispositif suivant la revendication 6 **caractérisé en ce que** les surfaces interne et externe de la varistance (3) sont respectivement en contact avec un tube métallique interne (20) et un tube métallique externe (14) qui forment ses électrodes et qui sont respectivement en contact avec les bagues métalliques (10,12).

8. Dispositif suivant la revendication 7 **caractérisé en ce que** la liaison entre la bague métallique (12) et le tube externe (14) est assurée par des points de soudure dont le volume et le nombre sont tels qu'ils sont aptes à fondre sous l'effet d'une surtension de façon à assurer une fonction de déconnecteur.

9. Dispositif suivant l'une des revendications 7 ou 8 **caractérisé en ce que** l'espace interne au dit tube interne (20) est rempli d'un produit isolant et résistant tel que notamment une résine époxy.

10. Dispositif suivant l'une des revendications 1 ou 2 **caractérisé en ce qu'**il est constitué d'un support connecteur (23) qui comporte des moyens de réception respectifs des éléments (1,3) et qui assure leur liaison en parallèle ainsi que la connexion de leurs bornes communes respectives avec les bornes du dispositif.

## Patentansprüche

1. Überspannungsschutzvorrichtung für eine elektrische Stromversorgungsleitung, **dadurch gekennzeichnet, dass** sie mindestens zwei Elemente (1, 1', 3) aufweist, und zwar mindestens einen Zenerdioden-Blitzschutz (1, 1') des Typs, der bei Zerstörung kurzgeschlossen ist, und einen Varistor (3), wobei diese jeweils parallel angeordnete gemeinsame Verbindungsanschlüsse aufweisen, wobei der eine der gemeinsamen Anschlüsse (c, c') der zwei Elemente (1, 1', 3) mit der zu schützenden Leitung (S, 7) verbunden ist und der andere gemeinsame Anschluss (d, d') mit der Erde oder einem gemeinsamen leitenden Element verbunden ist.

2. Vorrichtung nach Anspruch 1, **dadurch gekennzeichnet, dass** dem Varistor (3) eine Trenneinrichtung (6, 6') zugeordnet ist, die zwischen diesem und der zu schützenden Leitung (5, 7) angeordnet ist.

3. Vorrichtung nach einem der Ansprüche 1 oder 2, **dadurch gekennzeichnet, dass** eine Trenneinrichtung (4) in Stromflussrichtung vor dem gemeinsamen Anschluss der zwei Elemente (1, 3) angeordnet ist und diese in die zu schützende Leitung (5, 7) geschaltet ist.

4. Vorrichtung nach einem der vorhergehenden Ansprüche, **dadurch gekennzeichnet, dass** sie aus einem Mantel von zylindrischer Gesamtform gebildet ist, dessen beide Enden durch zwei gegeneinander isolierte Metallreifen (10, 12) gebildet sind, die deren zwei Anschlüsse bilden, wobei jeder dieser Anschlüsse jeweils mit den gemeinsamen Anschlüssen der zwei Elemente (1, 3) verbunden ist.

5. Vorrichtung nach Anspruch 4, **dadurch gekennzeichnet, dass** das Zenerdioden-Blitzschutzelement (1, 1') entlang der Längsachse (yy') des zylindrischen Mantels angeordnet ist.

6. Vorrichtung nach einem der Ansprüche 4 oder 5, **dadurch gekennzeichnet, dass** der Varistor (3) die Form eines Rohrs hat, das um das Zenerdioden-Blitzschutzelement (1') herum angeordnet ist, derart, dass seine Längsachse mit der Längsachse (yy') des zylindrischen Mantels zusammenfällt.

7. Vorrichtung nach Anspruch 6, **dadurch gekennzeichnet, dass** die Innen- und Außenflächen des Varistors (3) mit einem innenliegenden Metallrohr (20) bzw. einem außenliegenden Metallrohr (14) in Kontakt sind, die dessen Elektroden bilden und jeweils in Kontakt mit den Metallringen (10,12) sind.

8. Vorrichtung nach Anspruch 7, **dadurch gekennzeichnet, dass** der Metallring (12) und das außenliegende Rohr (14) durch Schweißpunkte verbunden sind, deren Volumen und Anzahl derart sind, dass sie geeignet sind, unter Einwirkung einer Überspannung zu schmelzen, derart, dass sie als Trenneinrichtung fungieren.

9. Vorrichtung nach einem der Ansprüche 7 oder 8, **dadurch gekennzeichnet, dass** der Innenraum des innenliegenden Rohrs (20) mit einem isolierenden und dauerhaften Produkt wie beispielsweise einem Epoxidharz angefüllt ist.

10. Vorrichtung nach einem der Ansprüche 1 oder 2, **dadurch gekennzeichnet, dass** sie durch eine Verbindungsträgereinrichtung (23) gebildet ist, die jeweilige Einrichtungen zur Aufnahme der Elemente (1, 3) aufweist und diese parallel verbindet sowie deren jeweilige gemeinsame Anschlüsse mit den Anschlüssen der Vorrichtung verbindet.

## Claims

1. Device for protecting a line supplying electric current against voltage surges, **characterized in that** it comprises at least two elements (1, 1', 3), namely at least one lightning arrester (1, 1') incorporating Zener diode, of the type short-circuiting at the end of its life-time, and a varistor (3) of which the respective connection terminals are common and which are disposed in parallel, one of the common terminals (c, c') of these two elements (1, 1', 3) being connected to the line (5, 7) to be protected, and the other common terminal (d, d') being connected to earth or to a common conductive element.

2. Device according to Claim 1, **characterized in that** the varistor (3) is associated with a disconnector (6, 6') which is disposed between the latter and the line (5, 7) to be protected.

3. Device according to one of Claims 1 or 2, **characterized in that** a disconnector (4) is disposed upstream of the common terminal of the two elements (1, 3) which is connected to the line (5, 7) to be protected.

4. Device according to one of the preceding Claims, **characterized in that** it is formed by an envelope of globally cylindrical shape of which the two ends are formed by two metal rings (10, 12) insulated from each other constituting its two terminals, each of the latter being respectively joined to said common terminals of the two elements (1, 3).

5. Device according to Claim 4, **characterized in that** the lightning arrester element (1, 1') incorporating Zener diode is arranged along the longitudinal axis (yy') of the cylindrical envelope.

6. Device according to one of Claims 4 or 5, **characterized in that** the varistor (3) presents the shape of a tube which is disposed around the Zener diode lightning arrester element (1') so that its longitudinal axis merges with the longitudinal axis (yy') of the cylindrical envelope.

7. Device according to Claim 6, **characterized in that** the internal and external surfaces of the varistor (3) are respectively in contact with an internal metal tube (20) and an external metal tube (14) which form its electrodes and which are respectively in contact with the metal rings (10, 12).

8. Device according to Claim 7, **characterized in that** the connection between the metal ring (12) and the external tube (14) is ensured by welding spots whose volume and number are such that they are adapted to melt under the effect of a voltage surge so as to perform a function of disconnector.

9. Device according to one of Claims 7 or 8, **characterized in that** the space inside said internal tube (20) is filled with an insulating and resistant product such as in particular an epoxy resin.

10. Device according to one of Claims 1 or 2, **characterized in that** it is constituted by a connector support (23) which comprises means for respectively receiving the elements (1, 3) and which ensures their connection in parallel as well as the connection of their respective common terminals with the terminals of the device.
